# EUROPEAN PATENT SPECIFICATION

(11) **EP 3 470 297 B1**
(45) Date of publication and mention of the grant of the patent: **11.05.2022**
(21) Application number: 17195665.9
(22) Date of filing: 10.10.2017
(51) Int. Cl.: B62B 3/06, B60G 3/01, B66F 9/075

(54) **A DRIVE UNIT FOR AN INDUSTRIAL TRUCK AND AN INDUSTRIAL TRUCK WITH SUCH A DRIVE UNIT**
ANTRIEBSEINHEIT FÜR EIN FLURFÖRDERZEUG UND EIN FLURFÖRDERZEUG MIT SOLCH EINER ANTRIEBSEINHEIT
UNITÉ D'ENTRAÎNEMENT POUR CAMION INDUSTRIEL ET CHARIOT INDUSTRIEL COMPORTANT UNE TELLE UNITÉ D'ENTRAÎNEMENT

(43) Date of publication of application: 17.04.2019
(73) Proprietor: Mitsubishi Logisnext Europe AB, 435 82 Mölnlycke (SE)
(72) Inventor: Nielsen, Torben, 511 92 Örby (SE)
(74) Representative: Lind Edlund Kenamets Intellectual Property AB

(56) References cited:
- EP-A2- 0 209 502
- EP-A2- 1 897 842
- EP-A2- 2 641 809
- EP-B1- 2 030 939
- US-A- 3 380 546

## Description

### TECHNICAL FIELD

The present invention relates to a drive unit for an industrial truck, for example a pallet truck, and to an industrial truck comprising such a drive unit.

### BACKGROUND OF THE INVENTION

Many pallet trucks and other types of industrial trucks for lifting, lowering and transporting heavy loads have a drive unit with a drive wheel for driving, steering and braking. Usually, the drive unit is arranged in a main body, at the end of the industrial truck being opposite to the forks, and the drive wheel is often mounted underneath the motor that rotates the drive wheel. In order to increase ride comfort, reduce component wear and improve maneuverability, the motor and the drive wheel are usually suspended in a manner that allows up and down movement in response to bumps and dips in the road or the ground.

Various solutions for suspending the drive wheel and the motor in such a manner are known in the art. For instance, it is known to use a cradle-like member holding the drive unit and being suspended by four link arms allowing vertical movement in relation to the body of the industrial truck. An industrial truck exemplifying this solution is the PLP pallet truck sold by Unicarriers. While technically satisfactory, this solution is considered expensive and mechanically complicated, and a simpler alternative is disclosed in EP 2030939 B1. That document shows a holder mounted between the drive wheel and the motor and suspended by means of two vertical rods that are movably connected to the industrial truck. This solution, however, is sensitive in that the rods easily get stuck, by a mechanism similar to how a desk drawer might get jammed if inserted at a slight angle, and consequently cannot move up and down properly, due to friction, or will be subject to excessive wear as the industrial truck travels over uneven ground. This solution is also sensitive to wear and contamination.

EP 0209502 discloses a suspension arrangement for an industrial truck, wherein the motor and drive wheel are hingedly connected to the body of the truck by two pivotable pairs of link-arms.

Hence, further efforts aimed at finding new solutions for mounting the drive unit to the body of the industrial truck are warranted. In particular, there is a need for solutions that are more robust and less prone to the above-mentioned problem of getting stuck. There is also a need for solutions that mechanically simpler and/or less costly to manufacture.

### SUMMARY OF THE INVENTION

In view of the foregoing, and according to a first aspect of the invention, there is provided a drive unit for an industrial truck according to claim 1.

The steering axis is a geometrical axis which, when the industrial truck is in its operative position, is vertical or substantially vertical. By "substantially vertical" is here meant that the angle between the steering axis and the vertical is less than 15 degrees, for example less than 10 degrees, less than 5 degrees or less than 1 degree. An operator steers the industrial truck by turning the drive wheel about the steering axis, using for example a steering arm or the like.

The support may be directly or indirectly attached to the motor, and the support may be directly or indirectly attached to the drive wheel. For example, the drive wheel may be attached to the support via a structure allowing the drive wheel to rotate relative to the support. That is to say, the drive wheel may be rotatably attached to the support.

That rotation of the support about the guiding rod is prevented is not meant to exclude that the support still can pivot slightly about the guiding rod, such as e.g. a few degrees. Thus, by "rotation restrictor" as used in the present application is to be understood an element which restricts the rotation of the support about the guiding rod. The may be such that rotation is completely stopped, but it is also possible that some, limited rotation is allowed. Thus, the restriction does not necessarily fully stop such a rotation.

The invention is based on the realization that mounting the drive wheel and the motor to the body of the industrial truck by means of a guiding rod combined with a rotation stopper significantly reduces the problem of the drive unit getting stuck in such a way that drive unit and the industrial truck cannot move relative to each other along the steering axis. Thereby, the need for repair is reduced, and consequently also maintenance costs. Further, this solution is robust and not particularly sensitive to wear and manufacturing tolerances, and it is also cost efficient.

The drive unit may comprise a single guiding rod. Using only one guiding rod results in the risk of the drive unit getting stuck being particularly low.

The guiding rod may be a single guiding rod. However, two or more guiding rods may also be used, as long as these guiding rods are co-axial, and all extend along a single axis. Further, according to some embodiments, the support is fixedly connected to the guiding rod(s) and the attachment is fixedly connected to the body of the truck. However, alternatively the support may be fixedly connected to the attachment, and the guiding rod(s) be fixedly connected to the body of the truck. In case more than one guiding rod is used, it is also possible to have one guiding rod fixedly connected to the support and one guiding rod fixedly connected to the body of the truck.

The guiding rod may comprise a spring and/or a shock absorber for reducing shocks caused by bumps and dips in the ground. Thereby, no separate spring/shock absorber is required, and the number of components of the drive unit is reduced, resulting in lower production costs.

The rotation restrictor and the guiding rod may be arranged on opposite sides of the drive wheel when viewed in a forward direction of the industrial truck. Arranging the rotation restrictor in such a way makes it possible to prevent rotation particularly efficiently with a relatively light-weight and small rotation restrictor, since the forces are hereby minimized due to the relatively long moment arm. The rotation restrictor may be arranged to prevent rotation of the support about the guiding rod by cooperating with the industrial truck. This makes it possible to prevent rotation particularly efficiently by means of a mechanically simple construction. The rotation restrictor may for example cooperate with the industrial truck by being attached to the industrial truck in such a way that the drive unit cannot rotate about the guiding rod but can move relative to the industrial truck along the steering axis. As another example, the rotation restrictor may cooperate with the industrial truck by having a shape that is complementary to the shape of an element on the industrial truck, so that the rotation restrictor and the element fit together in such a way that the drive unit cannot rotate about the guiding rod but can move relative to the industrial truck along the steering axis.

The rotation restrictor may be arranged in an essentially tangential direction on a circle around the guiding rod. Also, the rotation stopper and the guiding rod may be arranged on opposite sides of the drive when viewed in a forward direction of the industrial truck.

Thus, various types of rotation restrictors are conceivable, something which facilitates adaptation of the drive unit to different types of industrial trucks. For example, the rotation restrictor may comprise an arm pivotally connected to the drive unit and arranged to be pivotally connected to the industrial truck. This arm is preferably substantially oriented in the direction of the force in order to optimize operation. The rotation restrictor may comprise a protrusion arranged to be received by a groove of the industrial truck. The rotation restrictor may comprise a groove arranged to receive a protrusion of the industrial truck. The rotation restrictor may comprise two rollers separated by a gap, the gap being arranged to receive a ridge of the industrial truck. The rotation restrictor may comprise a ridge arranged to be received by a gap separating two rollers of the industrial truck. These aforementioned rotation restrictors are considered to prevent rotation of the support about the guiding rod by cooperating with the industrial truck in the sense used herein.

According to a second aspect of the invention, there is presented an industrial truck comprising a drive unit as discussed above. The industrial truck may for example be a pallet truck and/or comprise a five-point chassis. Industrial trucks with a five-point chassis typically have a drive wheel arranged at the end opposite to the load bearing fork, two coaster wheels arranged on each side of the drive wheel, and two wheels arranged underneath a respective fork arm. The above-described drive unit is particularly suitable for pallet trucks and industrial trucks with a single drive wheel. In particular, the drive unit may be used in industrial trucks, pallet trucks and the like having a three, four or five-point chassis.

### BRIEF DESCRIPTION OF THE DRAWINGS

For exemplifying purposes, the invention will be described in closer detail in the following with reference to embodiments thereof illustrated in the attached drawings, wherein:
Fig 1 is a side view in perspective of an industrial truck in accordance with an embodiment of the present invention;
Fig 2 is a schematic view from below of the industrial truck of Fig 1;
Fig 3 is a perspective view of the industrial truck with a part removed to expose a drive unit;
Fig 4a-c are side views of the drive unit in Fig 3 seen from different angles; and
Fig 5a-d are schematic illustrations of various alterative embodiments for the displaceable connection between the support and the body of the truck.

### DETAILED DESCRIPTION OF CURRENTLY PREFERRED EMBODIMENTS

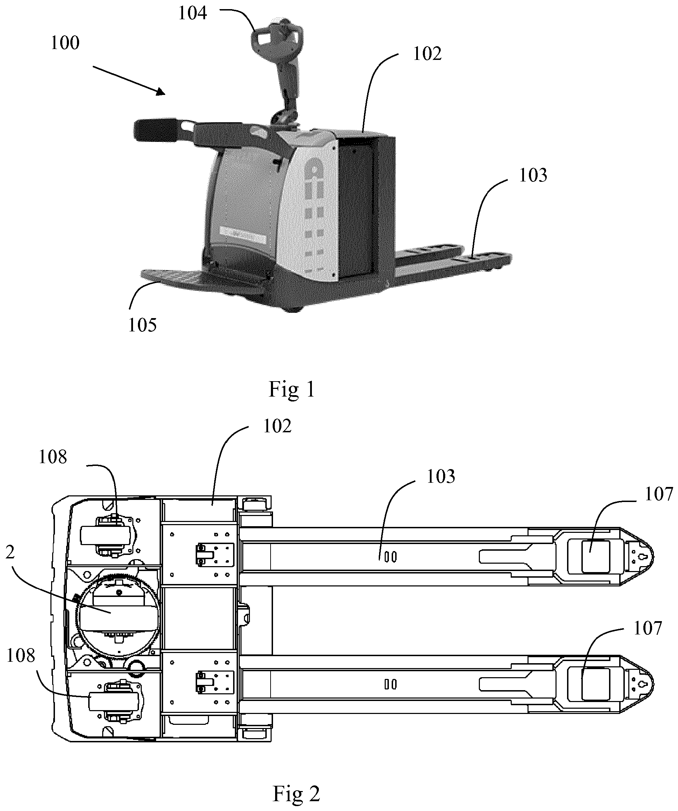

Referring now to Fig. 1, there is shown a perspective view of an industrial fork lift truck 100. The fork lift truck 100 comprises a main body 102 and forks 103 extending from one side of the main body, for carrying and lifting loads.

In this example, the truck is maneuvered through a tiller arm 104 and of the type where the operator walks along the truck during use, i.e. a pedestrian controlled truck. However, the operator may alternatively stand on a downfoldable platform 105 during operation.

However, this specific truck type is only an example, and the present invention may be used in any type of fork lift truck.

As best seen in Figs 2, the truck comprises a drive wheel 2, connected to a drive unit, which will be discussed in more detail below. The drive unit is also connected to the tiller arm 104. The drive wheel is operated, here via the tiller arm, to drive, brake and steer the truck.

In addition to the drive wheel, the truck comprises load wheels 107 arranged beneath the forks, and preferably at a distance from the main body 102. Further, the truck comprises two casters 108. The caster devices are preferably arranged close to the longitudinal sides of the main body, i.e. laterally displaced from the drive wheel, and preferably at or relatively close to the corners of the main body being farthest from the forks.

Thus, the truck is here a pallet truck with a five-point chassis. However, the caster devices may also be used in other types of trucks and in other configurations.

The caster devices stabilize the truck laterally, and e.g. prevent it from swaying, leaning sideways in curves, tipping over etc.

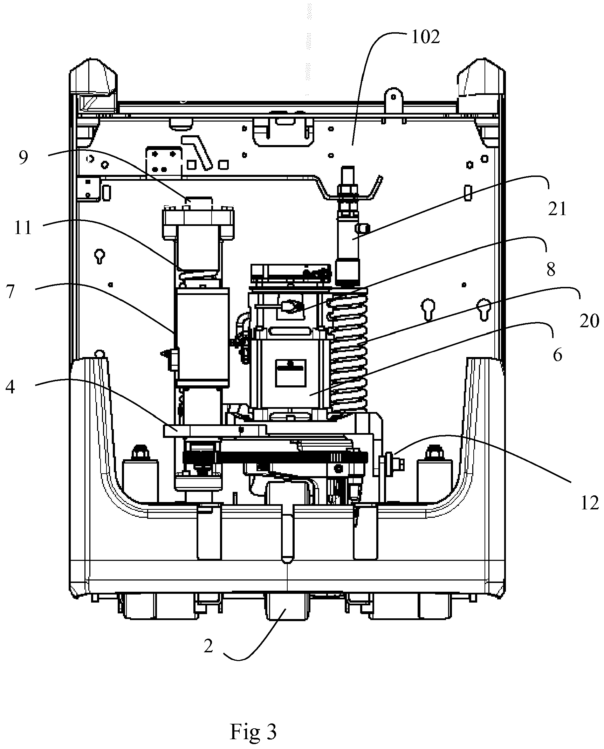

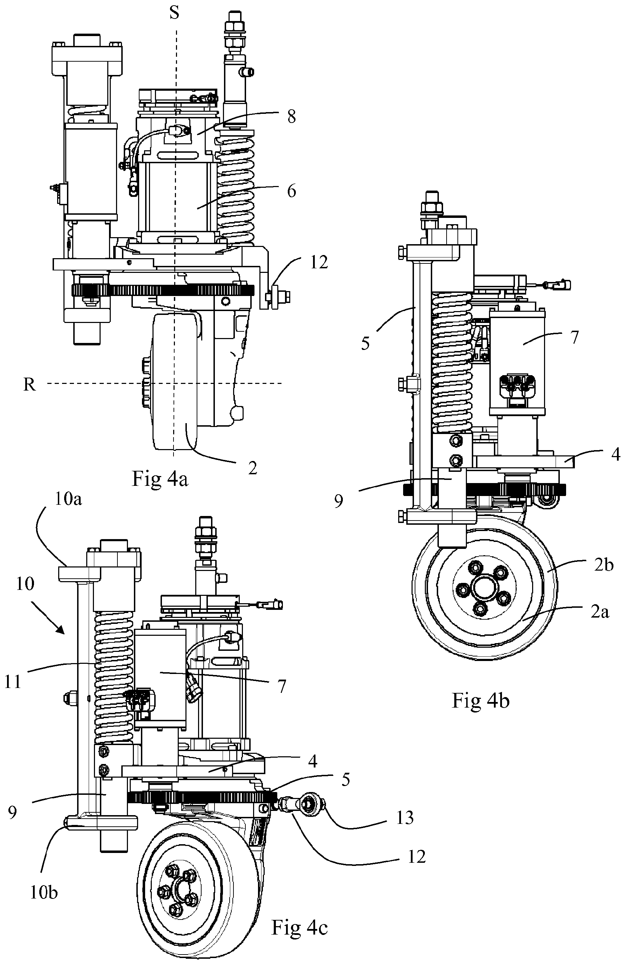

As best seen in Figs. 3 and 4, the drive unit 1 includes a drive wheel 2 which is rotatable about a rotation axis R. When the industrial truck 100 is in its operative position, the rotation axis R is horizontal, or substantially horizontal. The drive wheel 2 is also rotatable about a steering axis S which is vertical, or substantially vertical, when the industrial truck 100 is in its operative position. The rotation axis R and the steering axis S are thus perpendicular, or substantially perpendicular, to each other. In the illustrated example, the drive wheel 2 comprises a central hub 2a and a ring 2b arranged around an outer side of the hub 2a. The ring 2b is intended to be brought in contact with the ground or the road. The ring 2b is typically made of a wear-resistant material that provides good traction properties, for example a polymeric material.

The drive wheel 2 is mounted to a wheel mounting member/ gear case 3 so as to be rotatable about the rotation axis R. The gear case 3 is, in turn, attached to a support 4 via a slewing ring 5. In Figs. 3 and 4, the support 4 is located vertically above the drive wheel 2. The slewing ring 5 allows for the rotation of the gear case 3 and the drive wheel 2 about the steering axis S. A mount for the steering arm 104 (see Fig. 1) is mounted to the support 4. The mount (not shown) may have an upside down L-like shape and may extend vertically upwards from the support 4. In an alternative implementation, a steering motor 7 may be mounted on the support 4 and replaces the mount. The steering motor 7 is connected to control the rotation of the drive wheel 2 via the slewing ring 7 about the steering axis S and facilitates an operator's ability to maneuver the industrial truck 100. The steering motor 7 is optional and may or may not be included in other examples.

A motor 8, which may alternatively be referred to as an engine, is attached to the support 4, via a gearbox 6. The motor 8 is here an electric motor. In a different example, however, the motor 8 may be some other kind of motor, such as a combustion engine. In the illustrated example the motor 8 is mounted to the support 4 on a different side of the support 4 than the drive wheel 2. More precisely, the motor 8 is located vertically above the support 4 and the drive wheel 2 is located vertically below the support 4. Differently stated, the support 4 is arranged between the drive wheel 2 and the motor 8 along the steering axis S. The motor 8 is connected to drive the drive wheel 2, i.e. the motor 8 is connected to rotate the drive wheel 2 about the rotation axis R.

Thus, the support 4 is arranged to carry, directly or indirectly, both the motor 8 and the drive wheel 2. In the illustrated example, the support carries the motor indirectly, via the gearbox 6, and also the drive wheel is carried indirectly, inter alia via the gear case 3.

The support is further arranged to be displaceable in relation to the body of the truck, as will now be discussed in more detail.

A single guiding rod 9 is fixedly attached to the support 4, and is further displaceably attached to the body of the truck via an attachment 10. In the illustrated example the guiding rod 9 is surrounded by a spring 11. The spring may be used to balance the force between the drive wheel 2 and the caster wheels 108. This ensures that good contact between the drive wheel and the floor is maintained even when the truck travels over uneven floor surfaces, over bumps and the like. Additionally, or alternatively, a shock absorber, such as a hydraulic shock absorber or a pneumatic shock absorber, may be provided. As can be seen in Figs. 3 and 4, the guiding rod 9 is parallel, or substantially parallel, to the steering axis S. The attachment 10 attaches the guiding rod 9 to the body 102 of the industrial truck 100. The illustrated attachment 10 is elongated, and has two plates 10a, 10b at its opposite longitudinal ends. A spring 11 is sandwiched between the plate 10a and the support 4, and surrounds a major portion of the guiding rod 9, i.e. a major portion of the guiding rod 9 extends inside the spring 11. By this arrangement, the guiding rod 9 and the support 4 can move, together, up and down, i.e. parallel to the steering axis S, relative to the attachment 10 and the body 102 of the industrial truck 100. The motor 8 and the drive wheel 2 move together with the support 4 and the guiding rod 9 during such movement.

The drive unit 1 further includes a rotation restrictor 12. In the illustrated example, the rotation restrictor 12 is an arm arranged on a different side of the support 4 than the guiding rod 9, when viewed in the forward direction of the industrial truck 100. The arm 12 is rigid and straight. It is of course possible to use an arm 12 that is curved, or only partially straight. The arm 12 is typically made of a metal, for example steel, but can be made of some other material such that the arm 12 is capable of withstanding strong forces without breaking.

The rotation restrictor 12, i.e. the arm, is in this case pivotally connected to the support and to the body 101 of the industrial truck 100 at two pivot points 13, 14. Thereby, the support 4 and the body 101 of the industrial truck 100 can move up and down relative to each other. In contrast, as regards rotation of the support 4 about the guiding rod 9, the rotation restrictor 12 is arranged to prevent, or at least substantially prevent, such movement. The restrictor 12 therefore cooperates with the industrial truck 100 so as to prevent rotation of the support 4 about the guiding rod 9. It should be noted that, when the angular displacement of the rotation restrictor 12 about the pivot points 13, 14 is large, it may be the case that the support 4 can rotate slightly about the guiding rod 9. Thus, the extent to which the rotation restrictor 12 prevents the support 4 from rotating about the guiding rod 9 may vary slightly depending on the relative vertical positions of the drive unit 1 and the body 101 of the industrial truck 100.

Optionally, there may also be another, second spring 20 acting on the support 4. This spring may be variably compressed by a hydraulic cylinder 21. The cylinder 21 is connected to the main lift cylinder (not shown) so that the pressure inside the cylinder varies with the load on the fork arms and consequently compresses the spring increasingly with increasing load. This system balances the force between the caster and the drive wheel and focus the force to the drive wheel to provide the needed floor grip during acceleration and braking, also with heavy load on the fork arms

During use of the industrial truck 100, the drive wheel 2 is in frictional engagement with the ground. The motor 8 rotates drive wheel 2 about the rotation axis R, causing the industrial truck 100 to move. The operator steers the industrial truck 100 by moving the steering arm so that the drive wheel 2 rotates about the steering axis S. The guiding rod 9 helps to absorb shocks caused by the drive wheel 2 passing over uneven ground, whereby the handling of the industrial truck 100 is facilitated and ride comfort is improved.

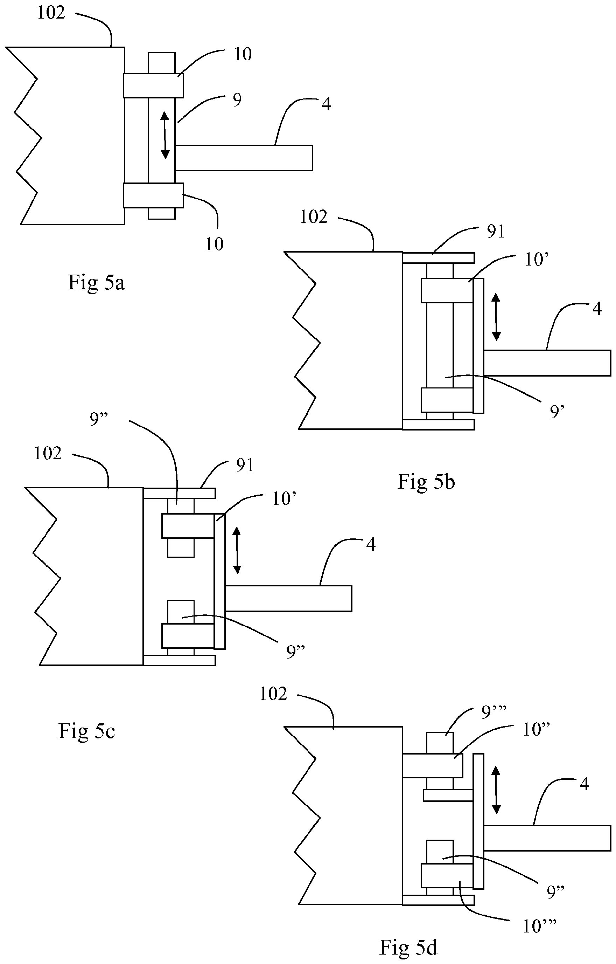

In the above-discussed embodiment, and as further illustrated in Fig 5a, the attachment 10 is fixedly connected to the body 102 of the truck. The guiding rod 9 is fixedly connected to the support 4, and is displaceably connected to the attachment 10, thereby allowing movement of the support 4, together with the rod 9, in relation to the body 102 of the truck.

In an alternative embodiment, as illustrated in Fig 5b, the guiding rod 9' is instead fixedly connected to the body 102 of the truck, e.g. via arms or brackets 91. Further, the support place is fixedly connected to the attachment 10'. The guiding rod 9' is displaceably connected to the attachment 10', thereby allowing movement of the support 4, together with the attachment 10', in relation to the body 102 of the truck.

In another alternative embodiment, as illustrated in Fig 5c, the attachment 10' is again fixedly connected to the support 4, as in the previously discussed embodiment. However, here the guiding rod is realized as two separate rods 9", being arranged along a single axis, i.e. being coaxial. The rods are fixedly attached to the body of the truck 102, e.g. via arms or brackets 91. Thus, the embodiment of Fig 5c functions in the same way as the embodiment of Fig 5b, but where two shorter rods 9" perform the same function as the longer single rod 9'. Naturally, two or more coaxial rods may also, in the same way, be used in the embodiment discussed in relation to Fig 5a.

In yet another alternative, as illustrated in Fig 5d, there is also two coaxial rods 9" and 9"'. One rod 9" is fixedly connected to the body of the truck 102, e.g. via an arm or bracket 91. An attachment 10'" is fixedly connected to the support 4, and is displaceably connected to the rod 9". The other rod 9'" is fixedly connected to the support 4, e.g. via an arm or bracket 91'. A second attachment 10" is fixedly connected to the body 102 of the truck, and is displaceably connected to the second rod 9"'. Thus, in this embodiment, the support 4 together with the first attachment 10"' and the second rod 9'" are displaceable in relation to the body 102 of the truck together with the second attachment 10" and the first rod 9". Thus, this embodiment may be seen as a combination of the embodiments discussed in relation to Figs 5a and 5b.

The person skilled in the art realizes that the present invention is not limited to the preferred embodiment described above. For instance, the rotation restrictor 12 may be of a different type than the arm described above, and the drive unit 1 may have two or more rotation restrictors. The rotation restrictor 12 may for example comprise a protrusion arranged to move up and down in a vertical groove on the body 102 of the industrial truck 100. Alternatively, the groove may be arranged on the drive unit 1 and the protrusion on the body 102 of the industrial truck 100. As another example, the rotation restrictor 12 may comprise two rollers that are arranged to roll against a respective side of a vertical ridge on the body 102 of the industrial truck 100. Alternatively, the ridge may be arranged on the drive unit 1 and the rollers on the body 102 of the industrial truck 100.

Further, the drive unit 1 is suitable for use with other types of industrial trucks than pallet trucks. The drive unit 1 may for example be used with a forklift truck, a reach truck, a stacker, an order picker or some other type of industrial truck. Still further, the drive unit 1 is suitable for use with other types of industrial trucks than industrial trucks with five-point chassis, such as industrial trucks with three or four-point chassis.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A drive unit (1) for an industrial truck (100), comprising:
a drive wheel (2) for driving and steering the industrial truck (100), the drive wheel (2) being rotatable about a steering axis (S);
a motor (8) connected to drive the drive wheel (2);
a support (4) arranged to directly or indirectly carry the motor (8) and the drive wheel (2); and
at least one guiding rod (9) and an attachment (10) attached to said at least one guiding rod (9), the guiding rod and the attachment being displaceable in relation to each other in the direction of an axis, wherein one of said guiding rod (9) and said attachment (10) is fixedly connected to the support (4) and the other to a body of the industrial truck (100), the support (4) J Z thereby being movable, essentially vertically, relative to the body (102) of the industrial truck (100); **characterized in that** all the guiding rods are arranged along a single axis, either by being a single guiding rod, or by being two or more guiding rods which are co-axial and all extending along said single axis, and **in that** it further comprises
a rotation restrictor (12) for preventing rotation of the support (4) about the at least one guiding rod (9).

2. The drive unit (1) according to claim 1, comprising a single guiding rod (9).

3. The drive unit (1) according to claim 1 or 2, wherein the at least one guiding rod (9) comprises a spring and/or a shock absorber.

4. The drive unit (1) according to any of the preceding claims, wherein the rotation restrictor (12) is arranged to prevent rotation of the support (4) about the at least one guiding rod (9) by cooperating with the industrial truck (100).

5. The drive unit (1) according to any of the preceding claims, wherein the rotation restrictor (12) is arranged in an essentially tangential direction on a circle around the at least one guiding rod.

6. The drive unit (1) according to any of the preceding claims, wherein the rotation restrictor (12) and the at least one guiding rod (9) are arranged on opposite sides of the drive wheel (2) when viewed in a forward direction of the industrial truck (100).

7. The drive unit (1) according to any of the preceding claims, wherein the rotation restrictor (12) comprises an arm pivotally connected to the drive unit (1) and arranged to be pivotally connected to the industrial truck (100).

8. The drive unit (1) according to any of the preceding claims, wherein the rotation restrictor (12) comprises a protrusion arranged to be received by a groove of the industrial truck (100).

9. The drive unit (1) according to any of the preceding claims, wherein the rotation restrictor (12) comprises a groove arranged to receive a protrusion of the industrial truck (100).

10. The drive unit (1) according to any of the preceding claims, wherein the rotation restrictor (12) comprises two rollers separated by a gap, the gap being arranged to receive a ridge of the industrial truck (100).

11. The drive unit (1) according to any of the preceding claims, wherein the rotation restrictor (12) comprises a ridge arranged to be received by a gap separating two rollers of the industrial truck (100).

12. An industrial truck (100) comprising a drive unit (1) according to any of the preceding claims.

13. The industrial truck (100) according to claim 12, wherein the industrial truck (100) is a pallet truck.

14. The industrial truck (100) according to claim 12 or 13, wherein the industrial truck (100) comprises a five-point chassis.

## Patentansprüche

1. Antriebseinheit (1) für ein Flurförderzeug (100), die Folgendes umfasst:
ein Antriebsrad (2) zum Antreiben und Lenken des Flurförderzeugs (100), wobei das Antriebsrad (2) um eine Lenkachse (S) drehbar ist;
einen Motor (8) zum Antreiben des Antriebsrads (2);
eine Stütze (4), die angeordnet ist, den Motor (8) und das Antriebsrad (2) direkt oder indirekt zu tragen; und
mindestens eine Führungsstange (9) und eine Befestigung (10), die an der mindestens einen Führungsstange (9) befestigt ist, wobei die Führungsstange und die Befestigung mit Bezug aufeinander in die Richtung einer Achse versetzbar sind, wobei eines der Führungsstange (9) und der Befestigung (10) fest mit der Stütze (4) und das andere mit einem Körper des Flurförderzeugs (100) verbunden ist, wobei die Stütze (4) dadurch relativ zum Körper (102) des Flurförderzeugs (100) im Wesentlichen vertikal bewegbar ist; **dadurch gekennzeichnet, dass** alle Führungsstangen entlang einer einzelnen Achse angeordnet sind, entweder dadurch, dass es sich um eine einzelne Führungsstange handelt oder dass es sich um zwei oder mehr Führungsstangen handelt, die koaxial sind und sich alle entlang der einzelnen Achse erstrecken, und dadurch, dass sie ferner Folgendes umfasst
einen Drehungsbegrenzer (12) zum Verhindern einer Drehung der Stütze (4) um die mindestens eine Führungsstange (9).

2. Antriebseinheit (1) nach Anspruch 1, die eine einzelne Führungsstange (9) umfasst.

3. Antriebseinheit (1) nach Anspruch 1 oder 2, wobei die mindestens eine Führungsstange (9) eine Feder und/oder einen Stoßdämpfer umfasst.

4. Antriebseinheit (1) nach einem der vorhergehenden Ansprüche, wobei der Drehungsbegrenzer (12) angeordnet ist, durch Zusammenwirken mit dem Flurförderzeug (100) eine Drehung der Stütze (4) um die mindestens eine Führungsstange (9) zu verhindern.

5. Antriebseinheit (1) nach einem der vorhergehenden Ansprüche, wobei der Drehungsbegrenzer (12) in einer im Wesentlichen tangentialen Richtung auf einem Kreis um die mindestens eine Führungsstange angeordnet ist.

6. Antriebseinheit (1) nach einem der vorhergehenden Ansprüche, wobei der Drehungsbegrenzer (12) und die mindestens eine Führungsstange (9), in einer Vorwärtsrichtung des Flurförderzeugs (100) gesehen, auf gegenüberliegenden Seiten des Antriebsrads (2) angeordnet sind.

7. Antriebseinheit (1) nach einem der vorhergehenden Ansprüche, wobei der Drehungsbegrenzer (12) einen Arm umfasst, der schwenkbar mit der Antriebseinheit (1) verbunden und angeordnet ist, schwenkbar mit dem Flurförderzeug (100) verbunden zu sein.

8. Antriebseinheit (1) nach einem der vorhergehenden Ansprüche, wobei der Drehungsbegrenzer (12) einen Vorsprung umfasst, der angeordnet ist, von einer Nut des Flurförderzeugs (100) aufgenommen zu werden.

9. Antriebseinheit (1) nach einem der vorhergehenden Ansprüche, wobei der Drehungsbegrenzer (12) eine Nut umfasst, die angeordnet ist, einen Vorsprung des Flurförderzeugs (100) aufzunehmen.

10. Antriebseinheit (1) nach einem der vorhergehenden Ansprüche, wobei der Drehungsbegrenzer (12) zwei Rollen umfasst, die durch einen Spalt getrennt sind, wobei der Spalt angeordnet ist, eine Erhöhung des Flurförderzeugs (100) aufzunehmen.

11. Antriebseinheit (1) nach einem der vorhergehenden Ansprüche, wobei der Drehungsbegrenzer (12) eine Erhöhung umfasst, die angeordnet ist, von einem Spalt, der zwei Rollen des Flurförderzeugs (100) trennt, aufgenommen zu werden.

12. Flurförderzeug (100), das eine Antriebseinheit (1) nach einem der vorhergehenden Ansprüche umfasst.

13. Flurförderzeug (100) nach Anspruch 12, wobei das Flurförderzeug (100) ein Gabelhubwagen ist.

14. Flurförderzeug (100) nach Anspruch 12 oder 13, wobei das Flurförderzeug (100) ein Fünfpunktchassis umfasst.

## Revendications

1. Unité d'entraînement (1) pour un chariot de manutention (100), comprenant :
une roue motrice (2) pour entraîner et diriger le chariot de manutention (100), la roue motrice (2) pouvant tourner autour d'un axe de direction (S) ;
un moteur (8) raccordé pour entraîner la roue motrice (2) ;
un support (4) agencé pour porter directement ou indirectement le moteur (8) et la roue motrice (2); et
au moins une tige de guidage (9) et une fixation (10) fixé à ladite au moins une tige de guidage (9), la tige de guidage et la fixation étant déplaçables l'une par rapport à l'autre dans la direction d'un axe, dans lequel l'une de ladite tige de guidage (9) et de ladite fixation (10) est reliée de manière fixe au support (4) et l'autre à une carrosserie du chariot de manutention (100), le support (4) étant ainsi mobile, essentiellement verticalement, par rapport au corps (102) du chariot de manutention (100) ;
**caractérisé en ce que** toutes les tiges de guidage sont agencées le long d'un axe unique, soit en étant une tige de guidage unique, soit en étant deux ou plusieurs tiges de guidage qui sont coaxiales et s'étendent toutes selon ledit axe unique, et **en ce qu'**elle comprend en outre
un limiteur de rotation (12) pour empêcher la rotation du support (4) autour d'au moins une tige de guidage (9) .

2. Unité d'entraînement (1) selon la revendication 1, comprenant une unique tige de guidage (9).

3. Unité d'entraînement (1) selon la revendication 1 ou 2, dans laquelle la au moins une tige de guidage (9) comprend un ressort et/ou un amortisseur.

4. Unité d'entraînement (1) selon une quelconque des revendications précédentes, dans laquelle le limiteur de rotation (12) est agencé pour empêcher la rotation du support (4) autour de la au moins une tige de guidage (9) en coopérant avec le chariot de manutention (100).

5. Unité d'entraînement (1) selon une quelconque des revendications précédentes, dans laquelle le limiteur de rotation (12) est agencé dans une direction essentiellement tangentielle sur un cercle autour de la au moins une tige de guidage.

6. Unité d'entraînement (1) selon une quelconque des revendications précédentes, dans laquelle le limiteur de rotation (12) et la au moins une tige de guidage (9) sont agencés sur des côtés opposés de la roue motrice (2) lorsqu'ils sont vus dans une direction vers l'avant du chariot de manutention (100).

7. Unité d'entraînement (1) selon une quelconque des revendications précédentes, dans laquelle le limiteur de rotation (12) comprend un bras relié de manière pivotante à l'unité d'entraînement (1) et agencé pour être relié de manière pivotante au chariot de manutention (100).

8. Unité d'entraînement (1) selon une quelconque des revendications précédentes, dans laquelle le limiteur de rotation (12) comprend une protubérance agencée pour être reçue par une rainure du chariot de manutention (100).

9. Unité d'entraînement (1) selon une quelconque des revendications précédentes, dans laquelle le limiteur de rotation (12) comprend une rainure agencée pour recevoir une protubérance du chariot de manutention (100) .

10. Unité d'entraînement (1) selon une quelconque des revendications précédentes, dans laquelle le limiteur de rotation (12) comprend deux rouleaux séparés par un espace, l'espace étant agencé pour recevoir une arête du chariot de manutention (100).

11. Unité d'entraînement (1) selon une quelconque des revendications précédentes, dans laquelle le limiteur de rotation (12) comprend une arête agencée pour être reçue par un espace séparant deux galets du chariot de manutention (100).

12. Chariot de manutention (100) comprenant une unité d'entraînement (1) selon une quelconque des revendications précédentes.

13. Chariot de manutention (100) selon la revendication 12, dans lequel le chariot de manutention (100) est un transpalette.

14. Chariot de manutention (100) selon la revendication 12 ou 13, dans lequel le chariot de manutention (100) comprend un châssis à cinq points.
